# EUROPEAN PATENT SPECIFICATION

(11) **EP 2 003 977 B1**
(45) Date of publication and mention of the grant of the patent: **17.10.2012**
(21) Application number: 07716086.9
(22) Date of filing: 23.03.2007
(51) Int. Cl.: A01N 59/00, B27K 3/16, C09D 183/06

(54) **KIT AND COMPOSITION FOR TREATMENT OF CELLULOSIC ARTICLES**
KIT UND ZUSAMMENSETZUNG FÜR DIE BEHANDLUNG VON CELLULOSEARTIKELN
KIT ET COMPOSITION POUR LE TRAITEMENT DES ARTICLES CELLULOSIQUES

(30) Priority: 24.03.2006 SE 0600681
(43) Date of publication of application: 24.12.2008
(73) Proprietor: SIOO FÄRGKULTUR, 415 24 Göteborg (SE)
(72) Inventor: BOSTRÖM, Herje, S-415 24 Göteborg (SE)
(74) Representative: Zakrisson, Ulrika
(86) International application number: PCT/SE2007/000284
(87) International publication number: WO 2007/111556

(56) References cited:
- WO-A-01/64804
- KR-A- 20020 003 714
- US-A- 3 493 401
- US-A- 3 615 781
- US-A- 5 415 688
- US-A- 5 700 523
- US-A1- 2005 042 377

## Description

### Technical field

The present invention relates to the use of a kit of parts for the treatment of cellulosic articles. The present invention further relates to a method for the treatment of cellulosic articles.

### Background of invention

Preservation of wooden articles is very important, for example when using wooden articles as a building material.

It is important that the wood is protected from mould growth, insect attacks etc, as well as it is desirable to prevent the wood from rotting. Further, it is desirable to render the wooden articles more resistant to fire.

It is well known in the art to treat wooden articles, and cellulosic articles in general, with sodium silicates. The aim of such treatment is to give the treated wood articles a structure resembling that of petrified wood, as petrified wood is known to be very stable over long periods of time.

However, by the conventional methods of treating the wood with sodium silicates, the silicate treatment is easily washed away by water. This is for example especially disadvantageous when the wooden articles are used in a wet environment, such as for example, when the wooden articles are used in marine environments.

Thus it would be desirable to provide a silicate treatment for cellulosic articles that is not easily washed away by water.

A method for obtaining a water resistant silicate treatment of wood is disclosed in U.S. Patent Application No 2005/0042377 A2 to Slimak et al. In this patent application, a method for treating cellulosic articles with sodium silicate is described where the sodium silicate, after treatment of the wood therewith, is converted into a water insoluble form. In this method, the cellulosic article is first soaked with or dipped in a solution of sodium silicate for a time period of a few days, and then heat treated at temperatures above 150 °C for a period of a few minutes.

A problem with this method is that in order to render the silicate insoluble in water, a heat treatment is needed. Even if the resulting treated article allegedly shows good properties, this method is not conveniently applicable to treatment of wooden articles already constituting part of a larger structure, such as for example a flooring, a house or the like, due to the extensive heating that is required to achieve the effect. Thus there exists a need for a method for providing cellulosic articles with a water resistant silicate treatment without the need for extensive heat treatment.

Further, the silicate treatment of U.S. Patent Application No 2005/0042377 A2 does not render the cellulosic articles water repellent to a large extent. Especially in marine environments and other applications where the cellulosic articles are often exposed to moisture and water, it would be advantageous to also provide good water repellent properties.

U.S. Patent 3,615,781 to Schneider and Schutt discloses a silicate coating composition of high silicate content, wherein the components are admixed shortly, before use. The coating composition provides a water-resistant glossy finish to the substrate to which it is applied.

However, one disadvantage of the coating composition of US 3,615,781 is that it does not penetrate into the treated article, which is desirable when treating wooden articles, but forms a coating on the surface of the treated article.

### Summary of invention

One object of the present invention is thus to provide a method for treatment of cellulosic articles with a silicate which both gives a water resistant silicate treatment as well as a water repellant product.

It is also an object of the present invention to provide compositions for use in such a method of treatment.

The present inventors have surprisingly found that a combination treatment with (i) potassium silicate, and (ii) a polymerizable alkoxy silane compound, is very efficient in providing the desired treatment of wood.

Thus, in a first aspect, the present invention relates to the use of a kit of part for the treatment of cellulosic articles, comprising at least a first and a second aqueous composition.

The first aqueous composition (i) has a basic pH and comprises a solution or dispersion of potassium silicate.

Typically, the molar ratio of Si:K of the potassium silicate is less than 3.

The second aqueous composition (ii) comprises an emulsion of at least one polymerizable alkoxy silane compound.

Preferably, the alkoxy silane compound is of the general formula I: 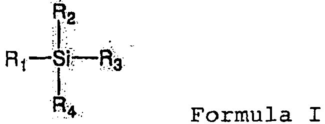 wherein
R¹ is selected from the group consisting of straight and branched, saturated and unsaturated alkyls and aryls, which group optionally is substituted with aromatic, halogen and/or heteroatom functionalities, and organo-functional groups;
R² and R³ are independently a straight or branched alkoxy group; and
R⁴ is selected from the group consisting of straight and branched, saturated and unsaturated alkyls and aryls, which group optionally is substituted with aromatic, halogen and/or heteroatom functionalities, and straight or branched alkoxy groups.

A cellulosic article, such as, but not limited to, wood, fiber board, paper, paperboard, and similar cellulosic materials are suitable for treatment with the compositions of the present invention. Also living plants, such as plant seedlings, can be treated with the compositions of the present invention.

When treating for example a wood article with the first composition, the internal structure of the wood is changed, and the potassium silicate crystallizes in and on the cell walls.

The thus formed potassium silicates renders the wood protection against mould growth, insect attacks and makes the wood fire resistant, yielding an artificial petrification of the wood.

The actual crystallization of the potassium silicate is effective not only as a preventive treatment, but also as an direct treatment of insects and fungi already present in the cellulosic article, as they are immobilized and/or killed during the crystallization process.

The potassium silicate crystals thus formed are however water soluble to a certain extent and may be washed away by extensive washing with water.

However, in addition to the silification of the cellulosic article, the potassium silicate treatment also opens up the structure of the cellulosic article, such as wood.

As a second step, the second aqueous composition, comprising the emulsion of the polymerizable alkoxy silane, is applied on the potassium silicate treated article.

As the potassium silicate treatment has opened up the structure, the alkoxy silane compound diffuse into the treated article to a larger extent than it would have done in a non-treated article.

When in contact with the silicate crystals, the alkoxy silanes polymerizes, forming big polysilane networks with pendant alkoxy groups. These non-polymerized alkoxy groups then reacts, presumably via a condensation reaction, to hydroxyl groups of molecules (such as hydroxyl groups of cellulose and silicates) in the wood article.

The formed polysilane network is strongly water repellant, thus yielding an at least partly covalently bonded water impregnation to the wood.

Further, the formed network of polysilanes formed from the second composition physically (sterically) locks the silicates from the first composition in the wood structure preventing the silicate treatment to be washed away.

Thus, the use of two aqueous compositions (i.e. the potassium silicate containing composition and the silane containing composition) provides a synergy effect where
(i) the silane compound penetrates deep into the wood due to that the silicate treatment have opened up the wood structure, yielding a thorough waterproofing to the wood;
(ii) the formed silane network locks the silicate treatment inside the wood structure, so that this silicate treatment cannot easily be washed out from the wood; and
(iii) the silicate provides a hard structure on the surface which locks the silane network on the surface.

The result is a wood article being stably silicate treated and waterproofed.

For example, the molar ratio of Si:K of said potassium silicate in the first composition may be less than 2. Alternatively, said molar ratio of Si:K in the first composition may be in the range of from 0.5 to 2.

The molar ratio Si:K determines whether the silicate exists predominantly in monomer form, dimer form, trimer form or larger forms, where a low ratio indicates more of the monomer form, and a high ratio indicates more of the larger forms. The monomer form of the silicate is the physically smallest form of the silicate possible.

In the present invention it is preferred to have a high percentage of silicates in monomer form, which here have been found to exhibit better penetration in the wood structure, and better abilities to form silicate crystals in or near the cell walls of wooden structures, giving a better silicate treatment.

In the present invention it may thus be preferred to have a rather low value of this ratio, i.e. in the range of from 0.5 to 2.

Typically, the pH of the first aqueous composition is at least 10, preferably at least 10.5. Such high pH values prevents the first composition from gel forming, helps to keep the composition as a stable solution during storage. Further, at the desired pH values, certain additional, optional, components in the composition, such as lignin and resins, are easily dissolved, promoting the penetration of such components in to the treated article. The desired pH values further helps in decomposing microbes present in the article and thus participates in the active treatment of the article. Further, the desired pH promotes reaction of further components, such as the polymerization of silanes which will be described below.

The first composition may comprise potassium silicate in a range of from 1.5-32 % by weight. For concentrations below this range, adequate penetration of the silane of the second composition may not be obtained. For concentrations above this range, adequate penetration of the potassium silicate may not be obtained.

Typically, the first composition comprises potassium silicate in a range of from 10-30 % by weight.

The potassium silicate may be present in the composition as a solution or a dispersion. In which form the potassium silicate is present depends, as is known by those skilled in the art, on the Si:K-ratio, where a low ratio, such as below 2 gives a solution, whereas a high ratio, such as above 20, gives a sol, and a dispersion in between. The form also depends to a certain extent on the concentration of potassium silicate in the composition.

In preferred embodiments, the first aqueous composition further comprises at least one additive selected from the group consisting of plant oil, abietic acid, carbohydrates, lignin, plant pigments and cellulose.

Such additives enhances the effect of the silicate treatment by the first composition.

The additives are each typically contained in said first composition in a concentration of from 0 to 10 % by weight.

Typically, R¹, as defined above, is a branched or straight, saturated or unsaturated C₁₋₁₈-alkyl group, preferably C₄₋₁₂-alkyl group. In preferred embodiments of the present invention, the alkoxy silanes of the second composition is used to providing a water proofing to the treated article. The R¹-group plays a major role in the degree of hydrophobicity of the resultant polysilane network. Thus it is preferred that R¹ is a hydrophobic group, such as for example a C₄₋₁₂-alkyl group, such as C₈.

Typically, R²' R³ and R⁴ independently is a straight or branched C₁₋₆-alkoxy group. During the polymerization process, the alkoxy groups are released as alcohols. As the reaction environment is an aqueous solution, it is therefore advantageous that the released alcohols are readily water soluble. Thus it is preferred that R²' R³ and R⁴ for example are methoxy (forming methanol) or ethoxy (forming ethanol).

Typically, the pH of the second composition is at least 5, preferably at least 7, more preferably at least 9.

Typically, the second composition comprises said polymerizable silane in a range of 0.5 to 60, such as from 0.5 to 15 % by weight.

In preferred embodiments of the present invention, the second aqueous composition further comprises at least one component selected from the group consisting of siloxane and silicone resin.

Such additional components increases the water proofing effect rendered by the second composition.

The additional components are typically contained in said second composition at a total concentration of from 0 to 10 % by weight.

Preferably, the second composition comprises an emulsifying agent in order to keep the emulsion of the alkoxy silane stable in the composition.

The present disclosure also relates to an aqueous composition for the treatment of wood.

This composition is mainly a combination of the first and the second aqueous compositions, and thus, comprises at least potassium silicate and an emulsion of a polymerizable alkoxy silane compound of the general formula I: 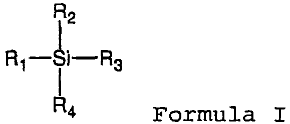 where R¹, R², R³ and R⁴ are as defined above.

Regarding potassium silicate, the concentration and Si:K ratios in the aqueous composition of the second aspect of the present invention are as defined above for the first composition in the first aspect of the present invention.

Regarding the polymerizable silane, the concentration in the aqueous composition of the second aspect of the present invention is preferably in the range of up to 3%, preferably up to 0.6 % by weight of the total composition.

Regarding additional components, such as additives selected from the group consisting of plant oil, abietic acid, carbohydrates, lignin, plant pigments and cellulose, and silanes and siloxanes, the concentrations in the aqueous composition of the second aspect of the present invention are as defined above for the compositions in the first aspect of the present invention

The present inventor have surprisingly found that also such a one-component composition is effective and gives approximately the same result on cellulosic articles as the above mentioned two-component system.

In a further aspect, the present invention relates to a method for treating cellulosic articles, comprising:
providing a cellulosic article; applying a first aqueous composition according to the above mentioned first aspect of the present invention on the cellulosic article; and applying a second aqueous composition according to the above mentioned first aspect of the invention on said cellulosic article.

Typically, after the first composition is applied on the cellulosic article, the article is allowed to dry to a reasonable extent before the second composition is applied on the surface.

Additionally, the present invention also relates to a method for treating cellulosic articles comprising applying an aqueous composition according to the above mentioned second aspect of the present invention.

Typically, the cellulosic article is of a material selected from the group consisting of wood, paperboard, fiberboard, paper and combinations thereof or living plants, such as plant seedlings.

Thus, the present invention relates to the use of a kit of parts according to the above mentioned first aspect of the invention for the treatment of cellulosic articles.

Typically, this use is for the purpose of rendering said cellulosic article resistant to water, wind, UV-radiation and temperature.

In a further aspect, the present invention relates to a cellulosic article treated by the methods of the present invention.

These and other aspects and advantages of the present invention will now be further described in the following detailed description of the invention.

### Brief description of the drawings

Figure 1 is a photograph illustrating the results of one of the experiments below.
Figures 2a and b are photographs illustrating the results of one of the experiments below.
Figure 3 is a photograph illustrating the result of one of the experiments below.

### Detailed description of preferred embodiments

The present invention relates in general to the treatment of cellulosic articles, in particular of wooden articles as well as compositions for use in this treatment.

By treating a wooden article according to a method of the present invention and/or with compositions of the present invention, a stabilized silicate treatment is provided as strongly, presumably at least partly covalently, bonded water-proofing.)

Thus in the first aspect the present invention provides use of a kit of parts for the treatment of cellulosic articles, comprising a first aqueous composition having a basic pH and comprising a solution, dispersion or sol (or combinations thereof) of potassium silicate, and a second aqueous composition having a basic pH and comprising an emulsion of a polymerizable alkoxy silane.

According to one method of the invention, which will be described more in detail below, the article, for example a wooden article, is treated by first applying the first composition (i.e. the potassium silicate) to the article, and subsequently applying the second composition (i.e. the polymerizable silane) to the article.

In the context of the present invention, any values on concentration is expressed in terms of % by weight. Further the concentrations are indicated for a composition ready for use. It is apparent for those skilled in the art that the compositions could be provided in more concentrated form, such as a stock solution, which is diluted to the desired concentration before use. Such stock solutions are also encompassed by the scope of the invention.

The aqueous compositions of the present invention may contain up to approximately 40 % by weight of an alcohol.

Typically however, the main portion (> 50%, such as > 70%, for example more than 90%) of the solvent in the working composition is water.

The first aqueous composition has a basic pH and comprises at least potassium silicate.

The pH of the first aqueous composition is above 10, preferably at least 10.5. A high pH value is desired in order to keep the silicate solution from gelling during storage. Further, the high pH is desired in order to provide suitable reaction conditions in subsequent reactions with silanes, as will be described below.

The concentration of the potassium silicate in the first composition is in the range of from 1.5 to 32 % by weight of the total composition, such as from 10 to 30 % by weight.

In embodiments of the present invention, potassium silicates suitable for use typically have a Si:K molar ratio of less than 10, preferably less than 3, more preferably less than 2.

Potassium silicate in solution exists in the form of monomers, dimers, trimers, or larger forms (where monomer is one SiO₂-unit per one K₂O-unit and a trimer is three SiO₂-units per one K₂O-unit).

The Si:K molar ratio affects the relative proportions of these forms and a lower ratio corresponds to a higher degree of monomers.

When treating a cellulosic, e.g. wooden, article with the potassium silicate solution, the solution diffuses into the structure.

The potassium silicate of the solution crystallizes on and in the treated article, providing a mineralized inner structure of the article.

For example, inside a wooden article, the potassium crystallizes both in and on the wood cells.

For purposes of the present invention, it is desired to have an as good as possible contact between the original article and the formed crystals. During crystallization, fungi and insects already present in the article are killed and/or immobilized in the cellulosic article. Thus, the first composition has a treating effect against mould and insects. In addition, the formed crystals form has a preventive effect against mould and/or insect attacks.

Not wishing to be limited to a specific theory, it is assumed that it is desired that the silicate of the first composition is capable of even being taken up by wooden cells. This may be obtained by using silicates having a small size. Here, the monomers of potassium silicate constitute smaller molecules than for example the tetramers of potassium silicate, and hence it is desired to have a low Si:K-ratio.

For this purpose, it has been found that it is desired to use a potassium silicate having a Si:K molar ratio below 3, preferably below 2.

However, a higher Si:K-ratio may be desired for other purposes than that currently claimed in the present invention, as the crystals formed by such potassium silicates are less susceptible to water, and hence provides a less water sensible silicate treatment to the cellulosic article. For example, it might, for such purposes, be preferred to have a higher Si:K-value, such as from 2 to 10 or even higher, such as up to 20 or above. However, potassium silicate with higher ratio, i.e., having a higher content of trimers or larger or even sol particles, do not have the same advantageous properties as low ratio potassium silicate.

The treatment of the article with potassium silicate provides several properties to the article, such as fire resistance, mould growth resistance, prevention of insect attacks, UV-protection, as the crystals absorbs and reflects light of UV-wavelengths. Also the potassium silicate crystals forms a blocking means against volatile organic compounds.

The use of potassium silicate instead of sodium silicate, as in U.S. Patent Application No. 2005/004377 A2, is based on several findings.

For example, potassium silicate is easier to disperse/dissolve in water than sodium silicate, yielding a more fine dispersed or more homogenously dissolved silicate which will have superior diffusion properties.

At the pH values that are desired for the above mentioned reasons, sodium silicate has shown not to form stable solutions, but forms a gel in the composition. Further, at the pH values desired sodium salts precipitates, which discolors the treated cellulosic articles.

The present inventor has surprisingly found that potassium silicate does not have these drawbacks.

This first potassium silicate-comprising composition of the present invention may further comprise minor amounts of other silicates, such as for example sodium silicate. However, such silicates constitutes a minor amount of the total silicate content, and typically, at least 70, such as at least 80, for example more than 90-95 weight% of the silicate content is constituted by potassium silicate.

Part from the above described potassium silicate, the first composition may also comprise one or more further additive to improve the effect of the first composition. Such additives are each typically contained in the first composition at a concentration of from 0 to 10 % by weight. The additives can be used alone or in any combinations.

Additives suitable for use in the first composition includes, but are not limited to:
lignin, which in combination with the potassium silicate provides a petrification of wood structures;
finely ground cellulose and/or plant pigments, which increases the active area inside the article,
abietic acid, which promotes the diffusion of the composition into the article;
carbohydrates, e.g. wood sugar, which promotes the diffusion of the composition into the article;
natural resins, promoting the binding of the potassium silicate to the article.

In preferred embodiments, the plant pigments are produced as is described in WO86/07080.

The above-mentioned additives also have effects on the silane composition that now will be described more in detail.

The second aqueous composition of the invention has a basic pH and comprises an emulsion of a polymerizable silane compound capable of (i) polymerizing in a cellulosic article, such as a wooden article, and (ii) binding covalently to cellulose and silicate crystals.

The pH is typically held at above 5, such as above 7, preferably above 9.

One group of silanes suitable for this purpose is the group of alkoxy silanes according to the general formula (I):

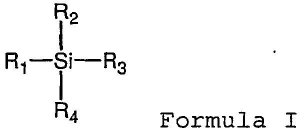

Typically, R¹ is selected from the group consisting of straight and branched, saturated and unsaturated alkyls or aryls, optionally substituted with aromatic, halogen and/or heteroatom functionalities.

Examples of R¹ groups suitable in the present invention include, for example straight and branched C₁₋₁₈-alkyls, such as C₄₋₁₂-alkyls, unsaturated variants thereof, and such alkyls optionally substituted with aromatic groups, for example phenyl, halogen atoms, such as F, Cl, Br, I, hetero atoms, such as O, N, S, P and other functionalities known to those skilled in the art.

In preferred embodiments of the present invention, the alkoxy silanes of the second composition is used to providing a waterproofing to the treated article. The R¹-group plays a major role in the degree of hydrophobicity of the resultant polysilane network. Thus, it is preferred that R¹ is a hydrophobic group.

Typically, R¹ is a non-hydrolyzable group, i.e. a group that cannot be cleaved off the Si-atom by hydrolysis.

Good results have been shown for R¹ being n-octyl.

The R¹ group may also, in a subsequent step be used for coupling other chemical compounds silanes, for example for coupling paints and lacquers to the article. For promoting such coupling, the R¹ group may further be substituted with an organo-functional group, for example amino, benzylamino, methacrylate, vinylbenzylamino, epoxy, chloropropyl, melamin, vinyl, ureido, mercapto, disulfido and tetrasulfido group. Preferably, such functionality is located near or at the end of the R¹ group distant from the Si-atom.

For example, an acrylate based paint or lacquer would be suitable for use on such a silane having a R¹-group being substituted with an amino, methacrylate or epoxy functionality. Other combinations of paints/lacquers and R¹-functionalities are known to those skilled in the art.

Examples of groups denoted R², R³ or R⁴ includes straight or branched alkoxy groups, i.e. an alkyl group bound to the Si-atom via an oxygen atom (Si-O-Alkyl). The groups R², R³ and R⁴ may be selected independently from each other, i.e. R² can be different from R³ and or R⁴.

Examples of R²⁻⁴ groups suitable in the present invention include, for example straight and branched C₁₋₆-alkyls, such as C₁₋₄-alkyls, unsaturated variants thereof, and such alkyls optionally substituted with aromatic groups, for example phenyl, halogen atoms, such as F, Cl, Br, I, hetero atoms, such as O, N, S, P and other functionalities known to those skilled in the art.

Good results have been shown for R²⁻⁴ being ethyl.

During the polymerization process, the alkoxy groups are released as alcohols. As the reaction environment is an aqueous solution, it is therefore advantageous that the released alcohols are readily water soluble. Thus it is preferred that R², R³ and R⁴ for example are methoxy (forming methanol), ethoxy (forming ethanol) or propoxy (forming propanol).

In addition R⁴ may also be selected from the groups described for R¹ above.

Two or more different silane compounds of the general formula (I) may be comprised in the same composition. In one example, a first silane of formula (I) where R², R³ and R⁴ independently are alkoxy-groups may be mixed with a second silane of formula (I) where R¹ and R⁴ is a selected from the groups described also for R² and R³ is selected from the group consisting of straight and branched, saturated and unsaturated alkyls, optionally substituted with aromatic, halogen and/or heteroatom functionalities.

In such a mixture of silanes, the first silane predominantly provides the strong binding to the hydroxyl groups of the cellulosic article, in order to bind the silane to the article, whereas the second silane provides a stronger effect as provided by the R¹ and R⁴, for example water repellant effect. The ratio between the first and the second silane is selected on the basis of the propertied desired by the treated cellulosic article.

The silane compound is typically contained in the second aqueous composition at a concentration of from 0.1 to 60 % by weight, such as from 0.5 to 15 % by weight, for example between 6 and 12 % by weight. Good results have been achieved with a composition comprising 9 % by weight of n-octyltriethoxysilane.

It shall be noted that the second aqueous composition of the first aspect of the invention preferably does not contain any silicate.

The second aqueous composition is relatively stable in emulsified form and at normal storage conditions.

There are several advantages of supplying the silane in form of an emulsion in water. For example, the emulsion in water essentially obviates the use of organic solvents, thus making the inventive composition more environmentally friendly, as water may be used as the carrier of the emulsion. Further, water is a solvent obtainable at a low cost.

When the second, silane containing, composition is applied on the cellulosic article treated as mentioned above, it comes in contact with the crystallized potassium silicate provided. This crystallized surfaces act as a catalyst for a polymerization reaction in order to form a polysilane network inside the article.

Not wishing to be bound to any specific theory, a conceivable reaction path is provided below.

By hydrolysis, the alkoxy groups R²⁻R⁴ are cleaved off the Si-atom as the alcohols of the alkoxy groups, leaving a reactive silanetriol, R¹-Si(OH)₃.

Via a condensation reaction, the silanetriol polymerizes.

The surfaces (inner and outer) of the cellulosic article exhibits a plurality of pendant hydroxyl groups, mainly originating from the cellulose and hemicellulose.

These cellulose hydroxyl groups form hydrogen bonds with non-reacted hydroxyl groups on the polymerized silanetrioles.

Via application of heat, these hydroxyl-hydroxyl hydrogen bonds is via condensation converted to covalent bonds between the cellulose and the silane polymer.

Without application of heat, this condensation is a rather slow process.

The formation of the silane network in the silicate treated article leads to that the silicate is physically hindered from being washed out from the article.

As will be realized, when the first composition comprises such additives as finely ground cellulose, the alkoxy silane will also bind to this cellulose, which thus provides a reinforcement of the article.

The reaction path described above is also valid for the reaction between the crystallized potassium silicate and the alkoxy silane. Also this potassium silicate have pendant hydroxyl (-OH) groups to which the silane covalently binds.

Thus, the silicate is both covalently bound to the silane network as well as sterically held within the article.

In addition to alkoxy silane, the second composition may also contain further components, such as siloxane and silicone resin.

When added onto the cellulosic article, the siloxanes form a protective surface layer, which immediately provides water proofing to the article. As the reaction within the article (i.e. the polymerization of the silane network and the condensation to covalently bind the silane network to the cellulose) is a slow reaction at ambient temperatures, it is important to provide an immediate waterproofing, enabling the silane-cellulose-silicate structures to form.

Siloxanes may be contained in the second composition at a concentration of up to 10 % by weight, such as up to 3 %.

Silicon resin may be used to further increase the water-repelling properties.

Silicon resin may be contained in the second composition at concentrations of up to 10% by weight, such as up to 3 %.

Further, the second aqueous composition of the present invention may also comprise an emulsifying agent having the purpose to promote and stabilize the silane emulsion.

Examples of such emulsifying agents are known to those skilled in the art and includes, but are not limited to alcoholethoxylates, sulphates (such as 2-hexyldecylsulphate) and sulphonates.

Solvents for the emulsifying agents are known to those skilled in the art, and includes, but are not limited to butanol, C₈₋₁₄-hydrocarbons, etc.

In cases where R¹ of the alkoxy silane comprises an organofunctional group, such as mentioned above, the second composition may further comprise components constituting a polymer based coating, such as a paint, laqcuer, etc, based on compounds suitable for coupling to the organo functional groups.

Thus, as an example, an article treated with a silane comprising an amino-functional R¹-group is well suited for being painted on with an acrylic based paint. The acrylic polymers in the paint will form covalent bonds with the aminofunctions on the silanes. As the silanes in turn will bind covalently to the potassium silicate and the cellulose, the acrylic based coating will be strongly bonded to the article.

Other such combinations between coating components and organofunctional groups will be apparent to those skilled in the art.

The combination of the silicate treatment and the silane treatment of the cellulosic articles truly gives synergy effects.

First, the silane compound it self does not have the ability to diffuse very deep into the structures (typically only about 1 to 1.5 mm in wood). However, the silicate treatment "opens up" the structure and thus, the silane compound has the ability to confer a more deep effective water-proofing (typically 2 to 3 mm or more). Hence, the depth of the water-proofing is increased by up to 100 % or more. This is for example advantageous in high wear application, where the article is subject to substantial wear and tear. In such applications it is desireable to have a deep effective protection as a too shallow treatment calls for re-treatment at an undesired frequency.

Secondly, the silane networks locks the otherwise water soluble potassium silicate crystals inside the treated article, so that the protection conferred by the potassium silicate treatment is stabilized. The silane treatment protects the potassium silicate crystals from water, so that they are not washed away by water.

The description above have been directed to a two component product, comprising a first potassium silicate containg composition, and a second alkoxy silane containing composition.

However, the effects, including the synergy effects, and advantages mentioned above for the two-component product have also been shown to be valid for a one-component product.

Such a one-component product comprises an aqueous composition having a basic pH, and comprising at least potassium silicate and an emulsion of alkoxy silanes.

The components of this one-component composition is that of the first aqueous compositon mentioned above, with the addition of the reactive/polymerizable silanes and optionally other components mentioned above taken from the second aqueous silane emulsion-comprising composition mentioned above.

Thus, the concentrations, pH values, additives, further components, selection of the groups R¹, R², R³ and R⁴, and reaction paths are all selected as mentioned above in connection to the first and second aqueous compositions of the two-component system as mentioned above in the first aspect of the invention. However, the concentration of the polymerizable silane is preferably reduced in relation to that in the two-component system.

In the one-component composition, the concentration of the polymerizable silane compound is up to 3, such as up to 0.6 % by weight.

When formulating the one-component composition it is important to keep this composition from spontaneoulsy reacting. By keeping the alkoxy silanes in the emulsion protected from the potassium silicate and cellulose, for example by using a emulsifying agent, the silanes are prevented from spontaneous polymerization.

The method of treating a cellulosic article depends of course on whether the one- or two-component product is used.

For the one-component product, the composition is applied onto the article by any suitable method, such as application by soaking, dipping, spraying, brushing, pressure impregnation etc.

For the two-component product, the first composition (potassium silicate) is applied onto the article, for example by the above-mentioned methods, followed by application of the second composition (alkoxy silane).

The first and the second compositions may be applied essentially simultaneously or may be applied subsequently. In a preferred method, the cellulosic article treated with the first composition is allowed to stand in order to have a reasonably dry surface before the second aqueous composition is applied on the surface.

Optionally, and which is common for both the one-and two-composition approach, the treated article may be heated in order to remove water and the alcohols formed in the reactions.

Heating is not necessary, but may also, as mentioned above, speed up the reaction in which the polysilane network binds to the cellulosic and silicate surfaces.

For illustrative purposes only, the following amounts of the compositions of the present invention may be used for treating 1 m² of wood:
(i) 0.2 l of the potassium silicate composition at a potassium silicate concentration of 10 % by weight; and
(ii) 0.12 l of a octyltriethoxysilane emulsion at a silane concentration of 9 %, per weight.

In methods where the silane compound comprises R¹-groups substituted with an organofunctional group, such as mentioned above, the resulting treated article is well suited for being coated with a coating, such as a paint, laqcuer, etc, based on compounds suitable for coupling to the organo functional groups. Thus, as an example, an article treated with a silane comprising an amino-functional R¹-group is well suited for being painted on with an acrylate paint. The acrylate polymers in the paint will form covalent bonds with the aminofunctions on the silanes. As the silanes in turn are covalently bound to the potassium silicate and the cellulose, the acrylate will be strongly bonded to the article.

Other such combinations between coatings and organofunctional groups will be apparent to those skilled in the art.

Cellulosic articles suitable for treatment with the compositions of the present invention includes any cellulosic article known to those skilled in the art, such as for example, but not limited to, articles of wood, paper board, fiber board, paper.

Especially contemplated is wooden articles, such as boards, logs etc. which are used in construction of houses, furniture, floorings, roofs, etc.

Another example of a cellulosic article that can be treated by the compositions of the present invention is living plants, such as for example plant seedlings. A plant seedling is very suspectible to mould and insects when it is newly planted. By treating the seedling according the the methods of the present invention, before or after it is planted can prevent insect and/or mould attacks from taking place, and is also an effective active treatment against any insect or mould attack already taking place at the time of treating the plant by the inventive method.

The treatment is only effective on the surface (the outer few mm of the plant) and does thus not interfere with the growth of the plant.

Thus, the present invention provides a method for protecting plants and plant seedlings from insect and/or mould growth by treating the plant/plant seedling with compositions of the present invention.

Cellulosic articles treated by the methods of the present invention and/or with compositons of the present inventions form a separate aspect of the present invention.

### Experiments

The following experiments are provided for illustrative purposes only and are not intended to limit the scope of the present invention.

### Experiment 1: Treatment of pressure impregnated wood

Two pieces of pressure impregnated wood (NTR class AB) was provided. One of the pieces were treated with a two-component system of the first aspect of the present invention, as follows:
1. Applying an aqueous composition of potassium silicate by brushing (potassium silicate concentration of 10 % by weight).
2. Drying in ambient temperature for 60 min.
3. Repeating step 1 (to a total of 0.2 l/m² at a potassium silicate concentration of 10 % by weight)
4. Drying in ambient temperature for 120 min.
5. Applying an octyltriethoxysilane emulsion in water (0.12 l/m² of a at a silane concentration of 9 % by weight) by brushing.

The second wood piece was left untreated.

The two wood pieces was placed horizontally on a wooden support under open sky and was left outdoors unprotected for one year (15/3-2005 - 15/3-2006) in Bohuslän, Sweden.

After the one year period, the two pieced was gently wiped with a damp cloth to remove loose dirt from the pieces.

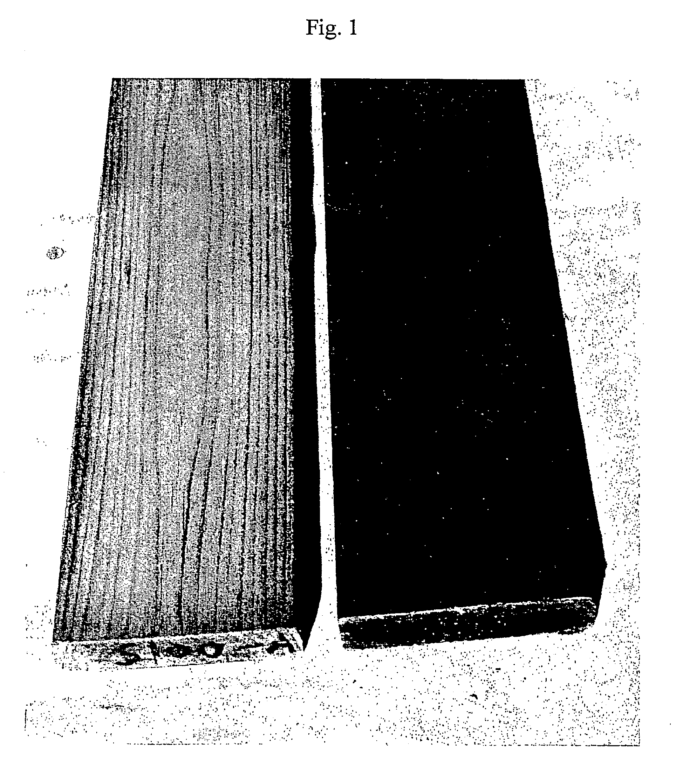

The result is shown in Figure 1, which is a photograph of the pieces, where the wood piece treated with the compositions of the present inventon is the piece to the left and the untreated is the piece to the right.

The picture clerly shows that the treated piece (left) is free from infestation of pests, and that the surface has not undergone any significant change in brightness, but still has a bright colour. This colour is obtained as shortly after the treatment according to the invention.

However, as is seen on the untreated piece (right), the surface has become dark and discoloured, and beginning pest infestations can be seen.

Thus, it is clear from this experiment that the treatment of the present invention provides a very effective weather protection and pest infestation prevention.

### Experiment 2: Evaluation of water repellent effect:

The aim of this experiment is to evaluate the water repellent effect of treatment according to the invention.

A portion of a panel of larch wood was treated according to the invention, where the potassium silicate composition further comprised 3 vol% ferric oxide pigment, whereas another portion of the same panel was left untreated.

The treated portion of the panel was treated as follows.
1. Applying an aqueous composition of potassium silicate (~0.15 l/m² at a potassium silicate concentration of 10 % by weight) by brushing.
2. Drying in ambient temperature for 90 min.
3. Applying an octyltriethoxysilane emulsion in water (0.12 l/m² of a at a silane concentration of 9 % by weight) by brushing.

The panel was kept outdoors under open sky for 9 months (15/6-2005 to 15/3-2006) at an angle of 45° in Bohuslän, Sweden.

The panel was held horizontally, and 1 ml of water was dispensed on the surface of the treated portion of the panel, and 1 ml of water was dispensed on the surface of the untreated portion of the panel.

The panel was left at 8 °C for 12 hours.

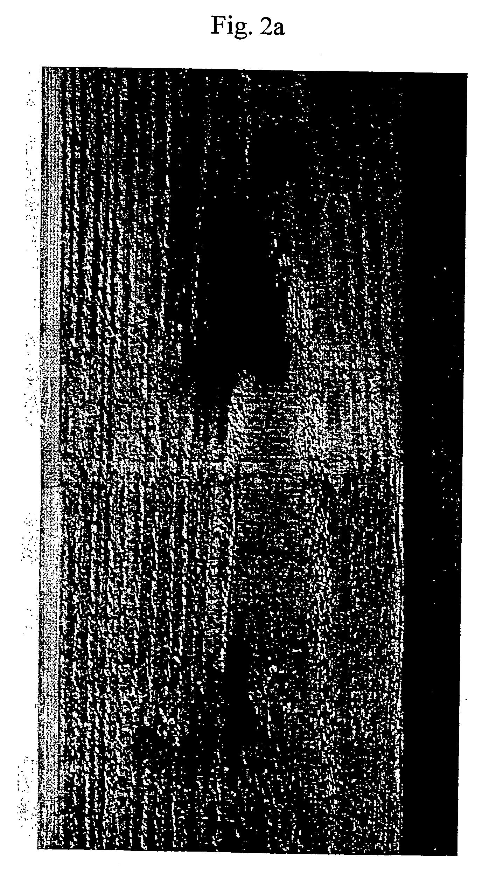

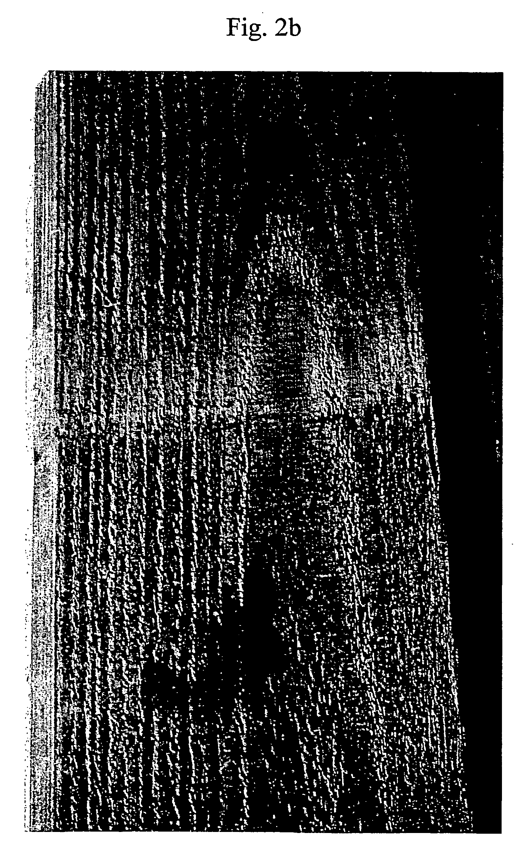

The result from the experiment is shown in figure 2a and 2b.
Figure 2a is a photograph of the panel immediatly after dispensing the water. The upper portion of the panel is the untreated portion, and the lower portion of the panel is the treated portion.
Figure 2a shows that the surface tension for the water is much higher on the treated portion than on the untreated portion of the panel, as the water forms beads on the lower portion but smears out on the upper portion.
Figure 2b is a photograph of the same panel after the 12 hour period. It clerly shows that the water on the upper (untreated) portion has penetrated into the panel, whereas in the lower (treated) portion, the water is still left on the surface and has not penetrated into the article.

### Experiment 3: Comparison with prior art treatment method

The aim of the experiment was to demonstrate the differences between the invention and the treatment method described in US 3,615,781.

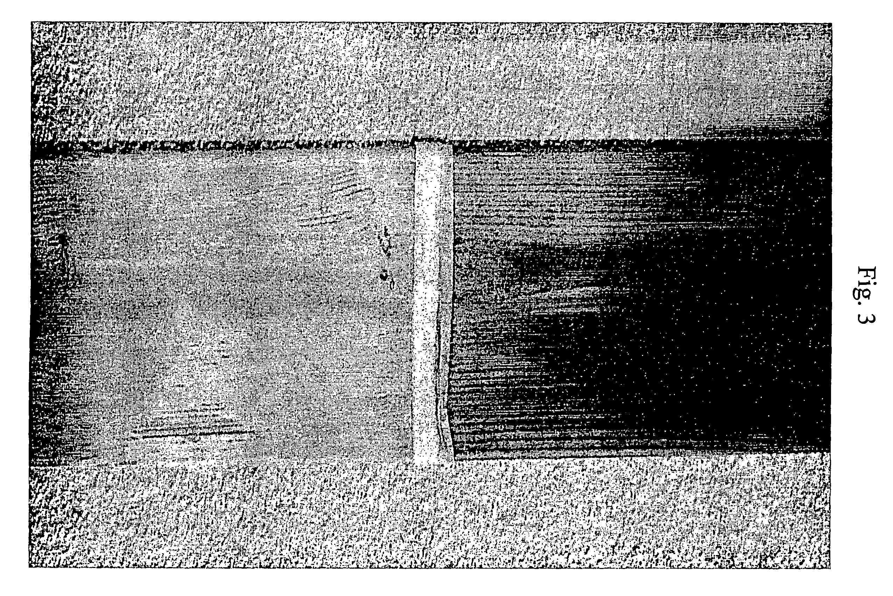

A piece of pressure impregnated wood (NTR class AB) was provided. One portion of the piece of wood (the upper portion of the piece shown in Figure 3) was treated with a two-component system according to the first aspect of the invention as follows:
1. Applying an aqueous composition of potassium silicate by brushing (potassium silicate concentration of 10 % by weight).
2.Drying at ambient temperature for 60 min.
3. Repeating step 1 (to a total of 0.2 l/m² at a potassium silicate concentration of 10 % by weight).
4. Drying at ambient temperature for 120 min.
5. Applying an octyltriethoxysilane emulsion in water (0.12 l/m² at a silane concentration of 9 % by weight) by brushing.

Another portion of the piece of wood (the lower portion of the piece of wood shown in Figure 3) was treated with a coating mixture prepared according to the method described in U.S. 3,615,781 as follows: Composition A of the coating mixture was formulated to comprise 200 g of potassium silicate solution having a solids content of 35 % and a SiO₂:K₂O mole ratio of 3.3 and 8 g of octyl triethoxysilane emulsion. Composition B of the coating mixture comprised 170 g of 50 % by weight of colloidal silica sol having a pH of 9.5. Each of the compositions A and B was completely dispersed and hydrolyzed, after which Composition B was added to Composition A with mechanical agitation. The resulting solution dispersion was allowed to equilibrate for about 1.5 hours until a dispersive equilibrium was achieved.

The piece of wood was allowed to dry indoors at ambient temperature for 10 days. The wood piece was then placed at an angle of 20° under open sky for 8 weeks (20/1-2007 - 20/3-2007) in Bohuslän, Sweden.

Directly after application, both portions of the wood piece exhibited a translucent coating, the lower portion treated according to a prior art method having a much thicker coating than the portion treated according to the invention. After some days of outdoor exposure the lower portion of the piece of wood had turned into a white colour. The whiteness quickly increased, especially after exposure to rain. Clearly, the white colour of the lower portion of the piece of wood was precipitate from the treatment. Thus, the lower portion of the piece of wood demonstated water absorption, whereas the upper portion of the wood piece did not absorb water, as evidenced by the lack of colour change in this portion of the wood piece, nor demonstrate a decrease in strength during the experiment.

After two weeks, the coating of the lower portion of the piece of wood har partly eroded so as to reveal the bare wood.

The results after 8 weeks outdoor exposure are shown in Figure 3, which is a photograph of the piece of wood. As can be seen, the coating of the lower portion, i.e. the coating according to U.S. 3,615,781, has completely eroded. However, the upper portion of the wood piece, i.e., the portion treated according to the invention has the same appearance and good function as it had directly after the application steps, a result which is consistent with the results obtained in Experiment 1.

### Experiment 4: Mould resistance

The aim of the experiment was to demonstrate the ability of a piece of wood treated according to the invention to resist and inhibit mould growth.

A piece of pressure impregnated wood (NTR class AB) was provided which had been placed in a flowed bed for approximately one year. The surface of the piece of wood was completely covered with green mould.

Four separate portions of the piece of wood was treated with four different applications, two of which were according to the invention. The applications are marked with letters as defined below. After application, the piece of wood was placed on the soil in a flowerbed in Bohuslän, Sweden and left for the period from December 15, 2006 to March 15, 2007.

The following procedures were followed for the applications T, T+V, V, and T/V, respectively:
Application T:
   1. Applying an aqueous composition of potassium silicate by brushing (potassium silicate concentration of 10% by weight).
   2. Drying at ambient temperature for 60 min.
   3. Repeating step 1 (to a total of 0.2 l/m² at a potassium silicate concentration of 10 % by weight).
Application T+V (corresponds to the first aspect of the invention):
   1. Applying an aqueous composition of potassium silicate by brushing (potassium silicate concentration of 10 % by weight).
   2. Drying at ambient temperature for 60 min.
   3. Repeating step 1 (to a total of 0.2 l/m² at a potassium silicate concentration of 10 % by weight).
   4. Drying at ambient temperature for 120 min.
   5. Applying an octyl triethoxysilane emulsion in water (0.12 l/m² at a silane concentration of 9% by weight) by brushing.
Application V:
   1. Applying an octyltriethoxysilane emulsion in water (0.12 l/m² at a silane concentration of 9 % by weight) by brushing.
Application T/V (corresponds to the second aspect of the invention):
   1. Applying an aqueous composition of potassium silicate by brushing (potassium silicate concentration of 10% by weight) and an admixture of 1 % by weight of octyl trietoxysilane emulsion in water.
   2. Drying at ambient temperature for 60 min.
   3. Repeating step 1 (to a total of 0.2 l/m² at a potassium silicate concentration of 10% by weight).

The results, established by ocular inspection, are shown in Tables 1 and 2.

Table 1 shows the ability of the treated wood to combat green mould. The result describes the percentage of green mould remaining one week after the treatment. The initial amounts of mould were 100 % for all portions.

**Table 1. Remaining amounts of green mould one week after application.**

| Application | Result |
|---|---|
| T | 2 % |
| T+V | 0 % |
| V | 30 % |
| T/V | 5 % |

Table 2 shows the ability of the treated wood to resist mould growth. The result is represented by the percentage of the surface on which mould growth had resumed after 6 weeks and 12 weeks, respectively. Before the observations, dirt was gently wiped off the piece of wood with a soft cloth.

**Table 2. Surface portions (percentage) of the wood piece having renewed mould growth**

| Application type | After 6 weeks | After 12 weeks |
|---|---|---|
| T | 40% | 80% |
| T+V | 2-4% | 5% |
| V | 70% | 95% |
| T/V | 10% | 20% |

Clearly, after 6 weeks and 12 weeks, respectively, the portions which had been treated with a two-component treatment according to the first aspect of the invention, or with a one-component treatment according to the second aspect of the invention were subject to much less mould growth than the portions treated solely with a potassium silicate containg composition or solely a silane containing composition. Thus, the experiment demonstrates the existence of a synergistic effect between the potassium silicate and the silane in treatments according to the present invention.

## Claims

1. A method for treating cellulosic articles, comprising:
providing a cellulosic article;
applying on said cellulosic article sequentially a first aqueous composition and a second aqueous composition, **characterized by**
(i) said first aqueous composition having a pH of at least 10 and comprising potassium silicate in a range of from 1.5 to 32 % by weight, the molar ratio of Si:K of said potassium silicate being less than 3;
and
(ii) said second aqueous composition comprising an emulsion of at least one polymerizable alkoxy silane compound of the general formula I: 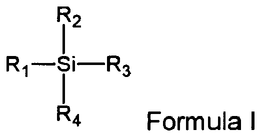 wherein
R¹ is selected from the group consisting of straight and branched, saturated and unsaturated alkyls and aryls, which group is optionally substituted with aromatic, halogen and/or heteroatom functionalities and organo-functional groups;
R² and R³ are independently a straight or branched alkoxy group; and
R⁴ is a straight or branched alkoxy group or is selected from the group consisting of straight and branched, saturated and unsaturated alkyls and aryls, which group is optionally substituted with aromatic, halogen and/or heteroatom functionalities and organo-functional groups.

2. A method according to claim 1, wherein said cellulosic article is of a material selected from the group consisting of wood, paperboard, fiberboard, paper and combinations thereof or a living plant.

3. A method according to claim 1 or 2, wherein the molar ratio of Si:K of said potassium silicate is less than 2, such as in the range of from 0.5 to 2.

4. A method according to any of the preceding claims, wherein the pH of said first aqueous composition is at least 10.5.

5. A method according to any of the preceding claims, wherein said first composition comprises potassium silicate in a range of from 10 to 30 % by weight.

6. A method according to any of the preceding claims, wherein said first aqueous composition further comprises at least one additive selected from the group consisting of plant oil, abeitic acid, carbohydrates, lignin, plant pigments and cellulose, such as contained in said first composition in a concentration of from 0 to 10 % by weight.

7. A method according to any of the preceding claims, wherein R¹ is a branched or straight, saturated or unsaturated C₁₋₁₈-alkyl group, preferably C₄₋₁₂-alkyl group.

8. A method according to any of the preceding claims, wherein R², R³ and R⁴ independently is a straight or branched C₁₋₆-alkoxy group.

9. A method according to any of the preceding claims, wherein the pH of said second composition is at least 5, preferably at least 7, more preferably at least 9.

10. A method according to any of the preceding claims, wherein said second composition comprises said polymerizable silane in a range of 0.5 to 60, preferably from 0.5 to 15 % by weight.

11. A method according to any of the preceding claims, wherein said second aqueous composition further comprises at least one component selected from the group consisting of siloxane and silicone resin, preferably in a concentration of up to 10% by weight.

12. Use of a kit of parts for the treatment of cellulosic articles, said kit of parts comprising at least a first and a second aqueous composition, **characterized by**
(i) said first aqueous composition having a pH of at least 10 and comprising potassium silicate in a range of from 1.5 to 32 % by weight, the molar ratio of Si:K of said potassium silicate being less than 3;
and
(ii) said second aqueous composition comprising an emulsion of at least one polymerizable alkoxy silane compound of the general formula I: 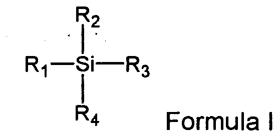 wherein
R¹ is selected from the group consisting of straight and branched, saturated and unsaturated alkyls and aryls, which group is optionally substituted with aromatic, halogen and/or heteroatom functionalities and organo-functional groups;
R² and R³ are independently a straight or branched alkoxy group; and
R⁴ is a straight or branched alkoxy group or is selected from the group consisting of straight and branched, saturated and unsaturated alkyls and aryls, which group is optionally substituted with aromatic, halogen and/or heteroatom functionalities and organo-functional groups.

13. Cellulosic article treated by a method according to any of the claims 1 to 11.

## Patentansprüche

1. Verfahren zur Behandlung von Celluloseartikeln, Folgendes umfassend:
Bereitstellen eines Celluloseartikels,
Aufbringen einer ersten wässrigen Zusammensetzung und einer zweiten wässrigen Zusammensetzung nacheinander auf den Celluloseartikel, **dadurch gekennzeichnet, dass**
(I) die erste wässrige Zusammensetzung einen pH-Wert von mindestens 10 aufweist und ein Kaliumsilikat in der Größenordnung von 1,5 bis 32 Gew.-% umfasst, wobei das Molverhältnis von Si:K des Kaliumsilikats kleiner als 3 ist, und
(II) die zweite wässrige Zusammensetzung eine Emulsion aus mindestens einer polymerisierbaren Alkoxysilanverbindung der allgemeinen Formel I umfasst: 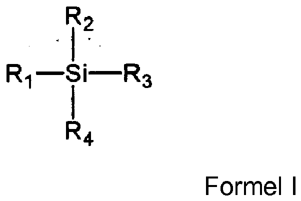 wobei
R¹ aus der Gruppe ausgewählt ist, die aus geraden und verzweigten, gesättigten und ungesättigten Alkylen und Arylen besteht, wobei die Gruppe optional mit aromatischen, Halogen- und/oder Heteroatomfunktionalitäten und organofunktionalen Gruppen substituiert ist,
R² und R³ unabhängig voneinander ein gerade oder verzweigte Alkoxygruppe sind und
R⁴ eine gerade oder verzeigte Alkoxygruppe ist oder aus der Gruppe ausgewählt ist, die aus geraden und verzweigten, gesättigten und ungesättigten Alkylen und Arylen besteht, wobei die Gruppe optional mit aromatischen, Halogen- und/oder Heteroatomfunktionalitäten und organofunktionalen Gruppen substituiert ist.

2. Verfahren nach Anspruch 1, wobei der Celluloseartikel aus einem Material besteht, das aus der Gruppe ausgewählt ist, die aus Holz, Pappe, Faserplatte, Papier und Kombinationen daraus oder einer lebenden Pflanze besteht.

3. Verfahren nach Anspruch 1 oder 2, wobei das Molverhältnis von Si:K des Kaliumsilikats kleiner als 2 ist, wie beispielsweise in der Größenordnung von 0,5 bis 2.

4. Verfahren nach einem der vorhergehenden Ansprüche, wobei der pH-Wert der ersten wässrigen Zusammensetzung mindestens 10,5 beträgt.

5. Verfahren nach einem der vorhergehenden Ansprüche, wobei die erste Zusammensetzung Kaliumsilikat in der Größenordnung von 10 bis 30 Gew.-% umfasst.

6. Verfahren nach einem der vorhergehenden Ansprüche, wobei die erste wässrige Zusammensetzung ferner mindestens ein Additiv umfasst, das aus der Gruppe ausgewählt ist, die aus Pflanzenöl, Abietinsäure, Kohlenhydraten, Lignin, Pflanzenpigmenten und Cellulose besteht, die in der ersten Zusammensetzung in einer Konzentration von 0 bis 10 Gew.-% enthalten sind.

7. Verfahren nach einem der vorhergehenden Ansprüche, wobei R¹ eine verzweigte oder gerade, gesättigte oder ungesättigte C₁₋₁₈-Alkylgruppe ist, vorzugsweise eine C₄₋₁₂-Alkylgruppe.

8. Verfahren nach einem der vorhergehenden Ansprüche, wobei R², R³ und R⁴ unabhängig voneinander eine gerade oder verzweigte C₁₋₆-Alkoxygruppe sind.

9. Verfahren nach einem der vorhergehenden Ansprüche, wobei der pH-Wert der zweiten Zusammensetzung mindestens 5 beträgt, vorzugsweise mindestens 7, bevorzugter mindestens 9.

10. Verfahren nach einem der vorhergehenden Ansprüche, wobei die zweite Zusammensetzung das polymerisierbare Silan in einer Größenordnung von 0,5 bis 60, vorzugsweise von 0,5 bis 15 Gew.-% umfasst.

11. Verfahren nach einem der vorhergehenden Ansprüche, wobei die zweite wässrige Zusammensetzung ferner mindestens eine Komponente umfasst, die aus der Gruppe ausgewählt ist, die aus Siloxan- und Silikonharz besteht, vorzugsweise in einer Konzentration bis zu 10 Gew.-%.

12. Verwendung eines Kits aus Anteilen zur Behandlung von Celluloseartikeln, wobei das Kit aus Anteilen mindestens eine erste und eine zweite wässrige Zusammensetzung umfasst, **dadurch gekennzeichnet, dass**
(I) die erste wässrige Zusammensetzung einen pH-Wert von mindestens 10 aufweist und ein Kaliumsilikat in der Größenordnung von 1,5 bis 32 Gew.-% umfasst, wobei das Molverhältnis von Si:K des Kaliumsilikats kleiner als 3 ist, und
(II) die zweite wässrige Zusammensetzung eine Emulsion aus mindestens einer polymerisierbaren Alkoxysilanverbindung der allgemeinen Formel I umfasst: 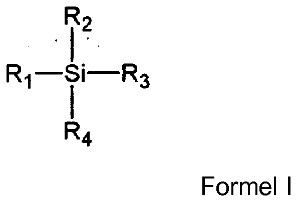 wobei
R¹ aus der Gruppe ausgewählt ist, die aus geraden und verzweigten, gesättigten und ungesättigten Alkylen und Arylen besteht, wobei die Gruppe optional mit aromatischen, Halogen- und/oder Heteroatomfunktionalitäten und organofunktionalen Gruppen substituiert ist,
R² und R³ unabhängig voneinander ein gerade oder verzweigte Alkoxygruppe sind und
R⁴ eine gerade oder verzeigte Alkoxygruppe ist oder aus der Gruppe ausgewählt ist, die aus geraden und verzweigten, gesättigten und ungesättigten Alkylen und Arylen besteht, wobei die Gruppe optional mit aromatischen, Halogen- und/oder Heteroatomfunktionalitäten und organofunktionalen Gruppen substituiert ist.

13. Celluloseartikel, behandelt in einem Verfahren nach einem der Ansprüche 1 bis 11.

## Revendications

1. Procédé pour traiter les articles cellulosiques, comprenant :
la fourniture d'un article cellulosique :
l'application sur ledit article cellulosique séquentiellement d'une première composition aqueuse et d'une seconde composition aqueuse, **caractérisé par**
(i) ladite première composition aqueuse ayant un pH d'au moins 10 et comprenant du silicate de potassium dans une plage allant de 1.5 à 32 % en poids, le rapport molaire Si:K dudit silicate de potassium étant inférieur à 3; et
(ii) ladite seconde composition aqueuse comprenant une émulsion d'au moins un composé d'alkoxy silane polymérisable de la formule I générale : 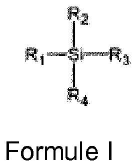 où
R¹ est sélectionné à partir du groupe consistant en alkyls et aryles droits et ramifiés, saturés et insaturés, dont le groupe est optionnellement substitué à des groupes aux fonctionnalités aromatiques, halogènes et/ou hétéroatomiques et organo-fonctionnels ;
R² et R³ sont indépendamment un groupe alkoxy droit ou ramifié ; et
R⁴ est un groupe alkoxy droit ou ramifié ou est sélectionné à partir du groupe consistant en alkyls et aryles droits et ramifiés, saturés et insaturés, dont le groupe est optionnellement substitué à des groupes aux fonctionnalités aromatiques, halogènes et/ou hétéroatomiques et organo-fonctionnels.

2. Procédé selon la revendication 1, où ledit article cellulosique est fait de matériau sélectionné à partir du groupe consistant en bois, carton, panneau de fibres, papier et combinaisons de celui-ci ou une plante vivante.

3. Procédé selon la revendication 1 ou 2, où le rapport molaire de Si :K dudit silicate de potassium est inférieur à 2, tel que dans la plage allant de 0.5 à 2.

4. Procédé selon l'une quelconque des revendications précédentes, où le pH de ladite première composition aqueuse est d'au moins 10.5.

5. Procédé selon l'une quelconque des revendications précédentes, où ladite première composition comprend du silicate de potassium dans une plage allant de 10 à 30% en poids.

6. Procédé selon l'une quelconque des revendications précédentes, où ladite première composition aqueuse comprend en outre un additif sélectionné à partir du groupe consistant en huile végétale, acide abéitique, hydrates de carbone, lignine, pigments végétaux et cellulose, tel que contenu dans ladite première composition à une concentration de 0 à 10% en poids.

7. Procédé selon l'une quelconque des revendications précédentes, où R¹ est un groupe alkyle C₁₋₁₈ ramifié ou droit, saturé ou insaturé, préférablement un groupe alkyle C₄₋₁₂.

8. Procédé selon l'une quelconque des revendications précédentes, où R², R³ et R⁴ indépendamment est un groupe alkoxy C₁₋₆ droit ou ramifié.

9. Procédé selon l'une quelconque des revendications précédentes, où le pH de ladite seconde composition est au moins 5, préférablement au moins 7, plus préférablement au moins 9.

10. Procédé selon l'une quelconque des revendications précédentes, où ladite seconde composition comprend du silane polymérisable dans une plage allant de 0.5 à 60, préférablement de 0.5 à 15% en poids.

11. Procédé selon l'une quelconque des revendications précédentes, où ladite seconde composition aqueuse comprend en outre au moins un composant sélectionné à partir du groupe consistant en siloxane et résine de silicone, préférablement à une concentration jusqu'à 10% en poids.

12. Utilisation d'un kit de pièces pour le traitement d'articles cellulosiques, ledit kit de pièces comprenant au moins une première et une seconde composition aqueuse, **caractérisé par**
(i) ladite première composition aqueuse ayant un pH d'au moins 10 et comprenant du silicate de potassium dans une plage allant de 1.5 à 32 % en poids, le rapport molaire Si:K dudit silicate de potassium étant inférieur à 3;
et
(ii) ladite seconde composition aqueuse comprenant une émulsion d'au moins un composé d'alkoxy silane polymérisable de la formule I générale : 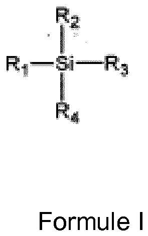 où
R¹ est sélectionné à partir du groupe consistant en alkyls et aryles droits et ramifiés, saturés et insaturés, dont le groupe est optionnellement substitué à des groupes aux fonctionnalités aromatiques, halogènes et/ou hétéroatomiques et organo-fonctionnels ;
R² et R³ sont indépendamment un groupe alkoxy droit ou ramifié ; et R⁴ est un groupe alkoxy droit ou ramifié ou est sélectionné à partir du groupe consistant en alkyls et aryles droits et ramifiés, saturés et insaturés, dont le groupe est optionnellement substitué à des groupes aux fonctionnalités aromatiques, halogènes et/ou hétéroatomiques et organo-fonctionnels.

13. Article cellulosique traité par un procédé selon l'une quelconque des revendications 1 à 11.
